# EUROPEAN PATENT APPLICATION

(11) **EP 4 349 885 A1**
(43) Date of publication of application: **10.04.2024**
(21) Application number: 22810401.4
(22) Date of filing: 16.05.2022
(51) Int. Cl.: C08G 83/00, B01J 20/22

(54) **THREE-DIMENSION CARBOXYLIC ACID COVALENT ORGANIC FRAMEWORK, PREPARATION METHOD THEREFOR AND USE THEREOF**

(30) Priority: 28.05.2021 CN 202110592504
(71) Applicant: Tsinghua University, Haidian District, Beijing 100084 (CN); Beijing Vfortune New Energy Power Technology Development Co., Ltd., Beijing 100084 (CN)
(72) Inventor: XU, Hong, Beijing 100084 (CN); HE, Xiangming, Beijing 100084 (CN); LI, Zonglong, Beijing 100084 (CN)
(74) Representative: Murgitroyd & Company
(86) International application number: PCT/CN2022/093033
(87) International publication number: WO 2022/247674

(57) **Abstract**

The present application relates to a three-dimensional carboxylic acid covalent organic framework, a preparation method thereof, and an application thereof. The three-dimension carboxylic acid covalent organic framework is formed by connecting a monomer to a compound via imine bonds formed by reacting formyl groups in the monomer with amino groups in the compound. The monomer is represented by structural formula I, II, or III, wherein R₁ is selected from C, Si, substituted or unsubstituted biphenyl, or 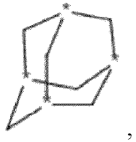 where * denotes a linking site; R₂ to R₃₁ are independently selected from H, C₁-C₆ linear alkyl, C₁-C₆ branched alkyl, or C₁-C₆ alkoxyl. The compound is represented by structural formula IV or V, wherein R₃₄ to R₄₁ are independently selected from H, Cl, Br, F, I, carboxyl, nitro, hydroxyl, C₁-C₆ linear alkyl, C₁-C₆ branched alkyl, or C₁-C₆ alkoxyl, and at least one of R₃₄ to R₄₁ is carboxyl.

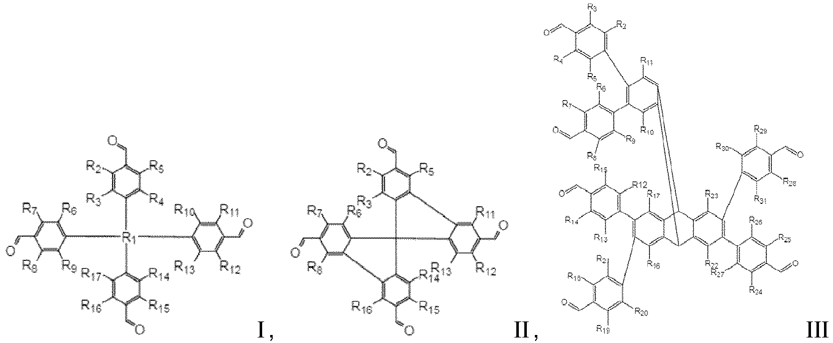

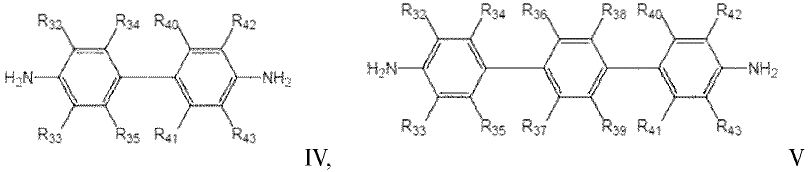

## Description

### CROSS-REFERENCE TO RELATED APPLICATIONS

This application claims priority to Chinese patent application No. 202110592504.7, filed on May 28, 2021, entitled "THREE-DIMENSION CARBOXYLIC ACID COVALENT ORGANIC FRAMEWORK, PREPARATION METHOD THEREFOR AND USE THEREOF". The content of the above identified application is hereby incorporated herein in its entirety by reference.

### TECHNICAL FIELD

The present application relates to the technology field of covalent organic frameworks, specifically to a three-dimensional carboxylic acid covalent organic framework, a preparation method thereof, and an application thereof.

### BACKGROUND

Covalent organic frameworks (COFs), characterized by periodicity and crystallinity, are categorized as porous organic polymers. They are often referred to as "organic zeolites" due to their uniform pore sizes and find extensive applications in gas adsorption, catalysis, energy storage, and related research areas.

At present, researches on covalent organic frameworks primarily focus on the field of two-dimensional materials, and the introduced target functional groups are generally hydroxyl and alkynyl, leading to fewer active sites in the finally obtained covalent organic frameworks. Moreover, the conventional method of introducing target functional groups usually involves post-modification. However, the harsh chemical environment during the post-modification leads to the collapse of the pores, drastically reducing the specific surface area of the resultant covalent organic frameworks. In addition, post-modification is often incomplete, which also leads to a decline in active sites within the materials.

### SUMMARY

In view of this, the present application provides a three-dimensional carboxylic acid covalent organic framework, a preparation method thereof, and an application thereof.

An aspect of the present application provides a three-dimensional carboxylic acid covalent organic framework formed by connecting a monomer to a compound via imine bonds formed by reacting formyl groups in the monomer with amino groups in the compound.

The monomer is represented by structural formula I, II, or III, wherein R₁ is selected from C, Si, substituted or unsubstituted biphenyl, or 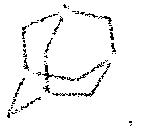 where * denotes a linking site; R₂ to R₃₁ are independently selected from H, C₁-C₆ linear alkyl, C₁-C₆ branched alkyl, or C₁-C₆ alkoxyl.

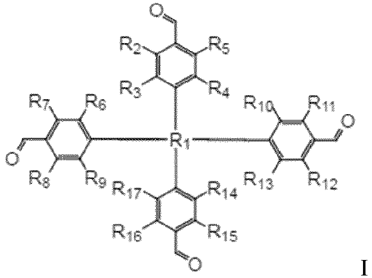

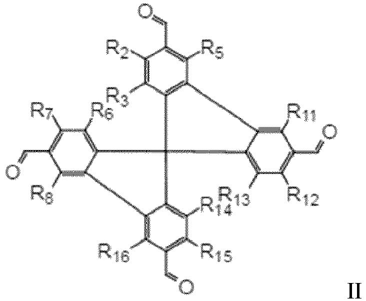

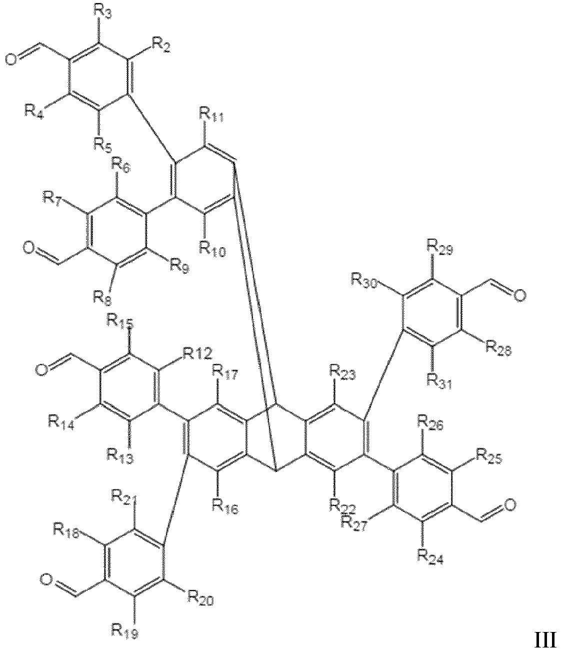

The compound is represented by structural formula IV or V, wherein R₃₂, R₃₃, R₄₂, R₄₃ are independently selected from H, Cl, Br, F, I, nitro, hydroxyl, C₁-C₆ linear alkyl, C₁-C₆ branched alkyl, or C₁-C₆ alkoxyl; R₃₄ to R₄₁ are independently selected from H, Cl, Br, F, I, carboxyl, nitro, hydroxyl, C₁-C₆ linear alkyl, C₁-C₆ branched alkyl, or C₁-C₆ alkoxyl, and at least one of R₃₄ to R₄₁ is carboxyl.

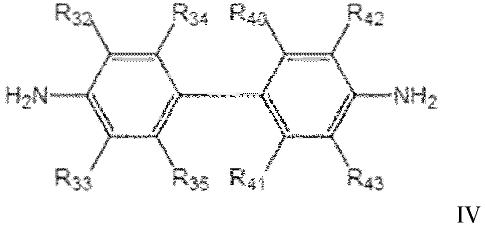

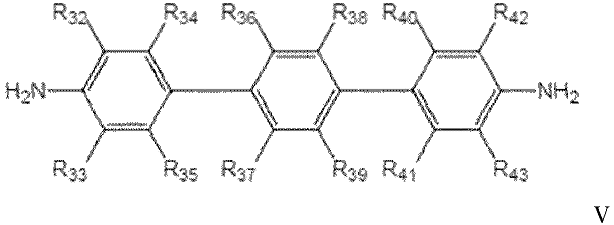

In some embodiments, the monomer is represented by formula VI, VII, or VIII:

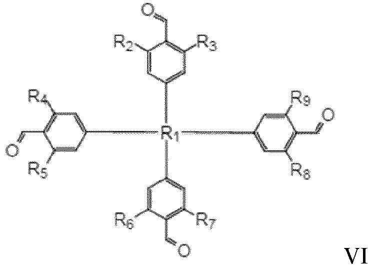

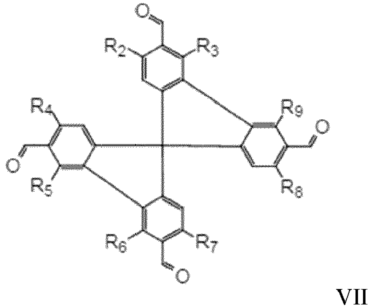

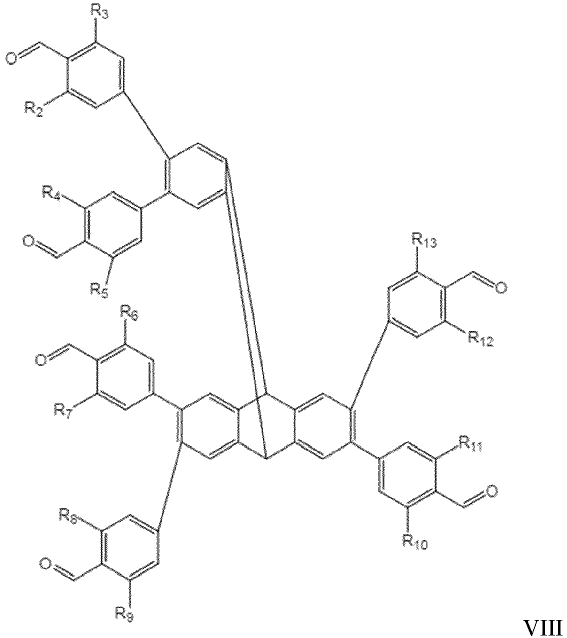

In some embodiments, the monomer is represented by formula VI or VII, wherein R₂ to R₉ are independently selected from H or C₁-C₆ alkoxyl, and the two groups of R₂ to R₉ connected to a phenyl group and adjacent to a formyl group are different from each other.

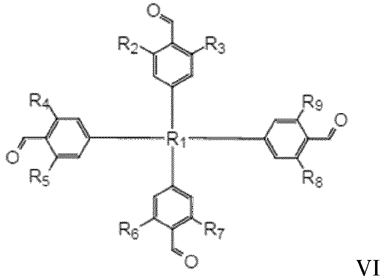

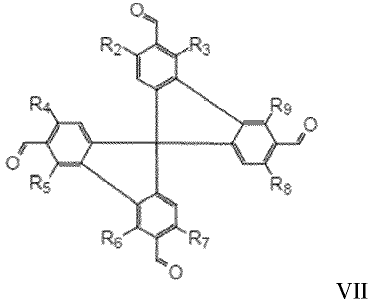

In some embodiments, the compound is represented by structural formula IV or V, wherein at least two of R₃₄ to R₄₁ are carboxyl.

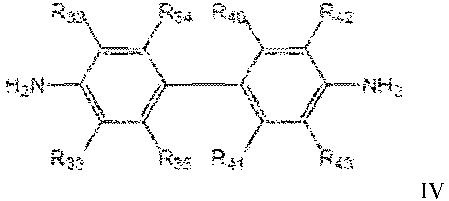

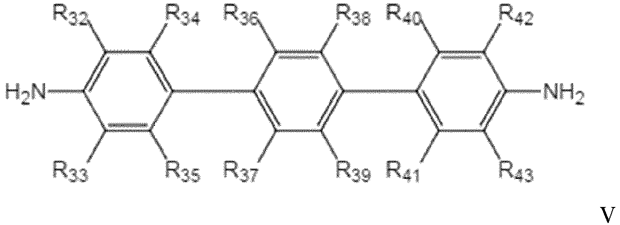

In some embodiments, the compound is represented by structural formula IX or X, wherein R₃₄ to R₄₁ are independently selected from H or carboxyl, and at least one of R₃₄ to R₄₁ is carboxyl.

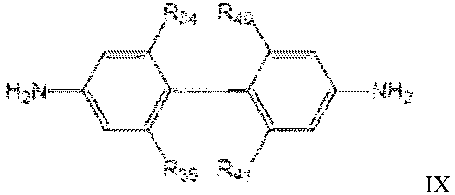

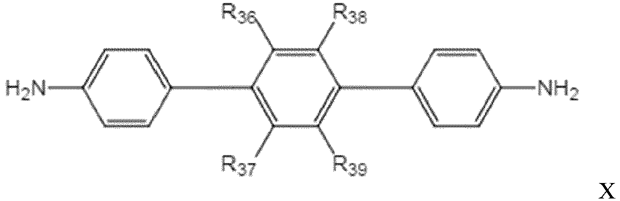

In some embodiments, a same monomer molecule is connected with a plurality of compound molecules via imine bonds formed by reacting formyl groups with amino groups, and a same compound molecule is connected with a plurality of monomer molecules via imine bonds formed by reacting formyl groups with amino groups.

Another aspect of the present application provides a method for preparing the above-described three-dimensional carboxylic acid covalent organic framework, including:
mixing the monomer, the compound, a first organic solvent, and a catalyst together, removing oxygen from the mixture, and then conducting a reaction in a sealed and heated state to form the three-dimensional carboxylic acid covalent organic framework.

In some embodiments, the first organic solvent is selected from the group consisting of 1,2-dichlorobenzene, 1,4-dioxane, n-butanol, ethanol, dichloromethane, N,N-dimethylformamide, chloroform, acetone, acetonitrile, tetrahydrofuran, and combinations thereof.

In some embodiments, the catalyst is selected from the group consisting of acetic acid, formic acid, benzenesulfonic acid, methyl benzenesulfonic acid, and combinations thereof.

In some embodiments, the reaction is conducted at a temperature ranging from 80°C to 150°C for a period of time ranging from 3 days to 7 days.

In some embodiments, the method further includes steps of washing, purifying, and drying the reaction product.

Yet another aspect of the present application provides an application of the above-described three-dimensional carboxylic acid covalent organic framework as a gas adsorbent.

Additionally, the present application provides a gas adsorbent including the above-described three-dimensional carboxylic acid covalent organic framework.

### BRIEF DESCRIPTION OF THE DRAWINGS

In order to illustrate the embodiments of the present application more clearly, the drawings used in the embodiments will be described briefly. It is evident that the following described drawings are merely for some embodiments of the present application, and other drawings can be derived by those of ordinary skill in the art without any creative effort.
FIG. 1 is a schematic view of synthesis of a three-dimensional carboxylic acid covalent organic framework in an embodiment of the present application.
FIG. 2 shows a powder X-ray diffraction (PXRD) pattern of a three-dimensional carboxylic acid covalent organic framework prepared in an embodiment of the present application.
FIG. 3 shows nitrogen gas adsorption-desorption isotherms of a three-dimensional carboxylic acid covalent organic framework prepared in an embodiment of the present application.
FIG. 4 shows carbon dioxide gas adsorption-desorption isotherms of a three-dimensional carboxylic acid covalent organic framework prepared in an embodiment of the present application.

### DETAILED DESCRIPTION

One or more embodiments of the present application will be detailed described below, illustrating rather than limiting the present application. It is evident to those skilled in the art that various modifications and variations can be made in the present application without departing from the scope or spirit of the present application. For instance, features described or illustrated as part of one embodiment may be included in another embodiment to yield further embodiments.

Therefore, the present application is intended to cover such modifications and variations falling within the scope and equivalents of the appended claims. Other objects, features, and aspects of the present application are disclosed in the following detailed description or are apparent therefrom. Those skilled in the art should understand that the present disclosure only describes exemplary embodiments and is not intended to limit broader aspects of the present application.

Unless otherwise indicated, all technical and scientific terms used herein have the same meaning as those normally understood by those of ordinary skill in the art. The terms used herein in the specification of the present application are for the purpose of describing specific embodiments only and are not intended to limit the present application. Unless otherwise indicated, the term "and/or" as used herein includes any and all combinations of one or more relevant listed items.

Unless otherwise specified or indicated in operative embodiments, all numerical values for describing composition amounts, physical and chemical properties, and so on in the specification and claims are understood to be modified by the term "about" in all cases. For example, unless otherwise specified, all numerical parameters listed in the specification and claims are all approximate values, which can be varied by those skilled in the art appropriately using the teachings disclosed herein in seeking desired properties. The numerical range defined by end points should be interpreted as including each specific number within that numerical range as well as any subranges within that numerical range. For instance, the range of 1 to 5 includes values such as 1, 1.1, 1.3, 1.5, 2, 2.75, 3, 3.80, 4, 5, etc.

In addition, the terms "first" and "second" are merely used for descriptive purposes, and should not be construed as indicating or implying relative importance or implying the quantity or order of the described technical features. Therefore, the features modified by "first" or "second" may explicitly or implicitly include at least one of the features. In the description of the present disclosure, "a plurality of" means at least two, such as two, three, etc., unless otherwise expressly and specifically defined. The term "several" in the description of the present application refers to at least one, such as one, two, and so on, unless explicitly specified otherwise.

The abbreviations and symbols used in the present application are consistent with those commonly used by professionals in the fields of chemistry and biology. Specifically, in embodiments and throughout the entire specification, the following terms may be represented by the abbreviations in parentheses:

Tetrahydrofuran (THF), 1,2-dichlorobenzene (o-DCB), powder X-ray diffraction (PXRD).

### Terms and Definitions

In the present application, the term "substituted" means that a hydrogen atom in a described chemical group is replaced by a substituent.

In the present application, "substituted or unsubstituted" means that the described chemical group can be substituted or unsubstituted. When the described chemical group is substituted, it should be understood as substituted with any acceptable group in the field, including but not limited to nitro, halogen atom, C₁-C₁₀ alkyl, C₁-C₁₀ alkoxy, or combinations thereof.

In the present application, "alkyl" refers to a saturated hydrocarbon group derived by removing one hydrogen (H) atom from an alkane molecule. The symbol "Cₙ" preceding "alkyl" indicates the number of carbon atoms in the alkyl group, where n can be an integer from 1 to 10. The number of carbon atoms in alkyl can range from 1 to 10, 1 to 8, 1 to 6, or 1 to 4. Alkyl can be linear or branched. For example, "C₁-C₉ linear alkyl" refers to a linear alkyl group containing 1 to 9 carbon atoms, each instance can independently represent C₁ linear alkyl, C₂ linear alkyl, C₃ linear alkyl, C₄ linear alkyl, C₅ linear alkyl, C₆ linear alkyl, C₇ linear alkyl, C₈ linear alkyl, or C₉ linear alkyl. "C₁-C₉ branched alkyl" refers to a branched alkyl group containing 1 to 9 carbon atoms, each instance can independently represent C₁ branched alkyl, C₂ branched alkyl, C₃ branched alkyl, C₄ branched alkyl, C₅ branched alkyl, C₆ branched alkyl, C₇ branched alkyl, C₈ branched alkyl, or C₉ branched alkyl.

The term "alkoxy" refers to a group of -O-alkyl, i.e., containing an oxygen atom and the above-defined alkyl which is connected to a parent structure via this oxygen atom. For example, "C₁-C₆ alkoxy" refers to an alkoxy group whose alkyl part contains 1 to 6 carbon atoms, each instance can independently represent C₁ alkoxy, C₂ alkoxy, C₃ alkoxy, C₄ alkoxy, C₅ alkoxy, or C₆ alkoxy. As defined, the alkyl part of alkoxy can also be branched or linear. Suitable examples include but are not limited to methoxy (-O-CH₃ or -OMe), ethoxy (-O-CH₂CH₃ or -OEt), and tert-butoxy (-O-C(CH₃)₃ or -OtBu).

The present application provides a three-dimensional carboxylic acid covalent organic framework formed by connecting a monomer to a compound via imine bonds (-C=N-) formed by reacting formyl groups in the monomer with amino groups in the compound.

The monomer is represented by structural formula I, II, or III, wherein R₁ is selected from C, Si, substituted or unsubstituted biphenyl, or 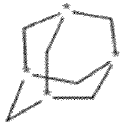 , where * denotes a linking site; R₂ to R₃₁ are independently selected from H, C₁-C₆ linear alkyl, C₁-C₆ branched alkyl, or C₁-C₆ alkoxyl.

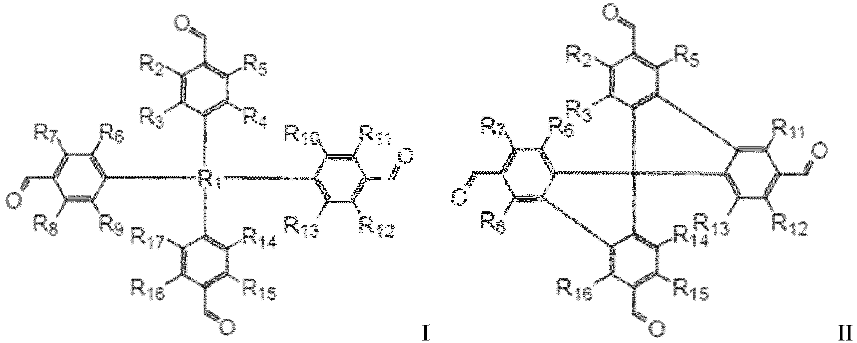

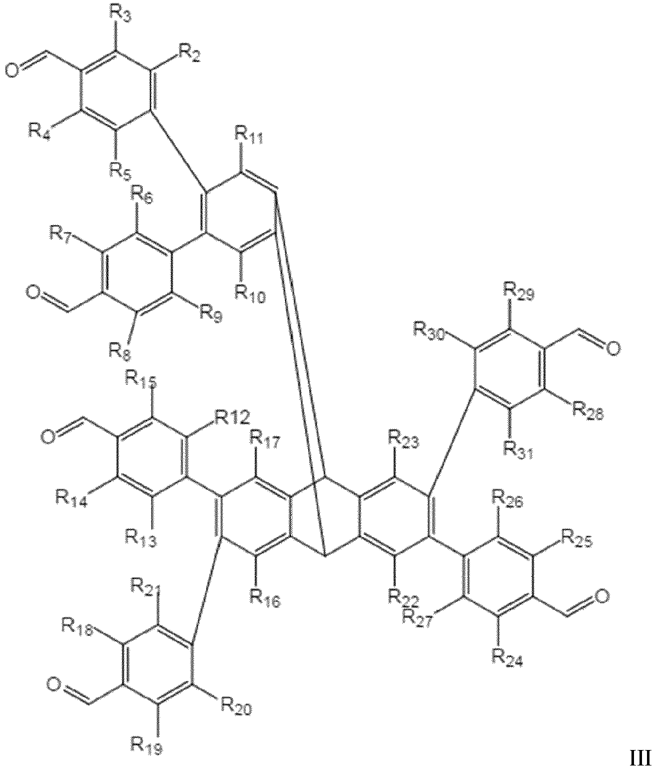

The compound is represented by structural formula IV or V, wherein R₃₂, R₃₃, R₄₂, R₄₃ are independently selected from H, Cl, Br, F, I, nitro, hydroxyl, C₁-C₆ linear alkyl, C₁-C₆ branched alkyl, or C₁-C₆ alkoxyl; R₃₄ to R₄₁ are independently selected from H, Cl, Br, F, I, carboxyl, nitro, hydroxyl, C₁-C₆ linear alkyl, C₁-C₆ branched alkyl, or C₁-C₆ alkoxyl, and at least one of R₃₄ to R₄₁ is carboxyl.

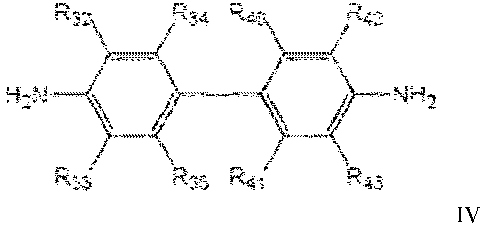

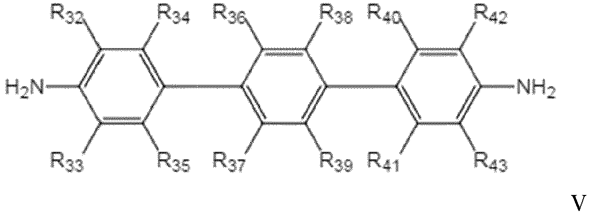

The embodiments of the present application involve introducing a compound with carboxyl groups into the monomer, resulting in a three-dimensional carboxylic acid covalent organic framework with abundant active sites and a high specific surface area.

In some embodiments, the three-dimensional carboxylic acid covalent organic framework is formed by connecting a monomer and a compound via imine bonds formed by reacting formyl groups in the monomer with amino groups in the compound, wherein some or all formyl groups in each monomer molecule is reacted with amino groups respectively belonging to a corresponding number of compound molecules to form the imine bonds; and some or all amino groups in each compound molecule is reacted with formyl groups respectively belonging to a corresponding number of monomer molecules to form the imine bonds.

In some embodiments, a same monomer molecule is connected to a plurality of compound molecules via the imine bonds formed by reacting the formyl groups with the amino groups, and a same compound molecule is connected to a plurality of monomer molecules via the imine bonds formed by the reacting the formyl groups with the amino groups.

In the embodiments where the monomer is represented by structural formula I or II, each monomer molecule is connected to one to four compound molecules via imine bonds resulting from the reaction, while each compound molecule is connected to one or two monomer molecules via imine bonds resulting from the reaction. In some embodiments, the number of compound molecules connected to the same monomer molecule via imine bonds ranges from 3 to 4, while the number of monomer molecules connected to the same compound molecule via imine bonds is 2.

In the embodiments where the monomer is represented by structural formula III, each monomer molecule is connected to one to six compound molecules via imine bonds resulting from the reaction, while each compound molecule is connected to one or two monomer molecules via imine bonds resulting from the reaction. In some embodiments, the number of compound molecules connected to the same monomer molecule via imine bonds ranges from 4 to 6, while the number of monomer molecules connected to the same compound molecule via imine bonds is 2.

In some embodiments, the monomer is represented by formula VI, VII, or VIII:

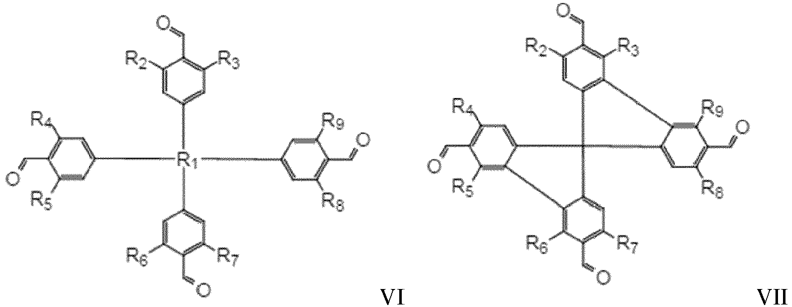

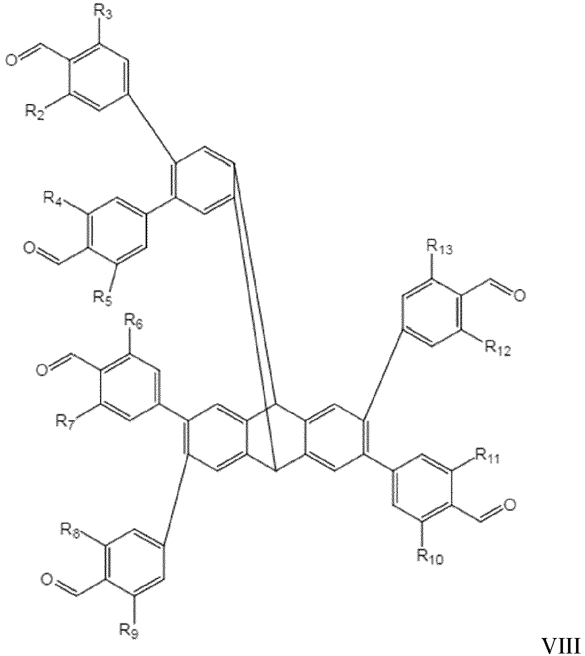

In some embodiments, the monomer is represented by formula VI or VII, wherein R₂ to R₉ are independently selected from H or C₁-C₆ alkoxyl, and the two groups of R₂ to R₉ connected to a phenyl group and adjacent to a formyl group are different from each other. In other words, in the same structural formula, R₂ is different from R₃, R₄ is different from R₅, R₆ is different from R₇, R₈ is different from R₉.

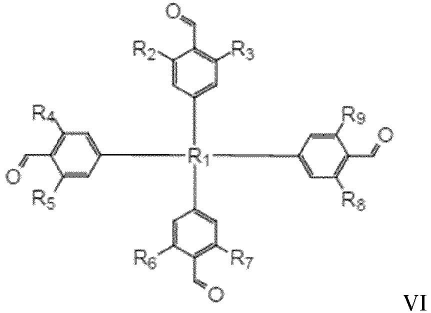

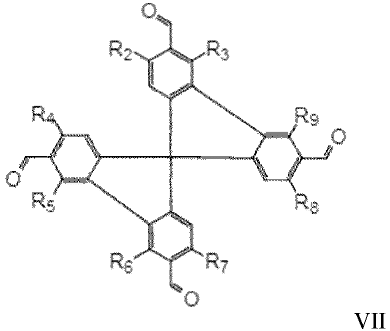

In some embodiments, the compound is represented by structural formula IV or V, wherein at least two of R₃₄ to R₄₁ are carboxyl.

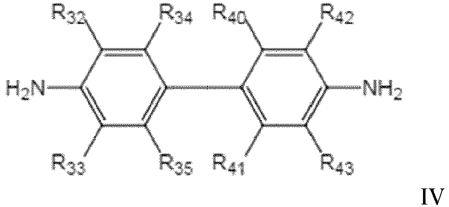

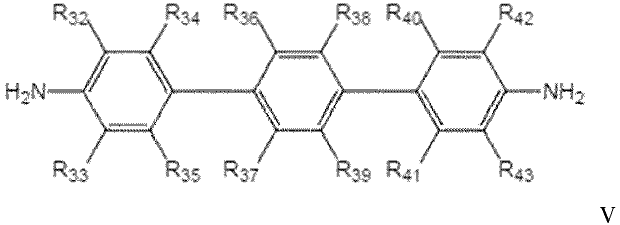

In some embodiments, the compound is represented by structural formula IX or X, wherein R₃₄ to R₄₁ are independently selected from H or carboxyl, and at least one of R₃₄ to R₄₁ is carboxyl.

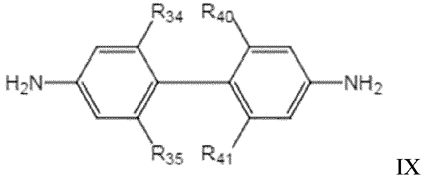

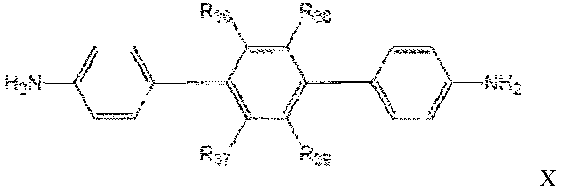

In some embodiments, the monomer is selected from any of the following structures.

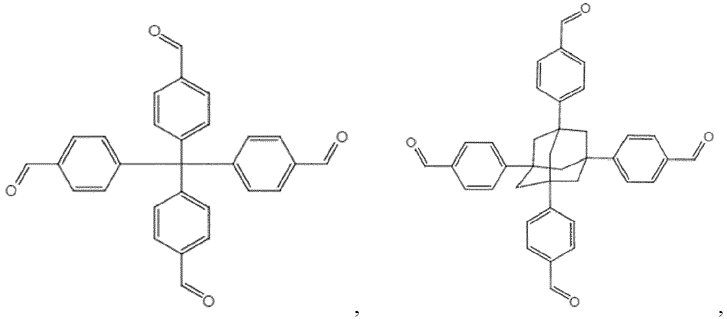

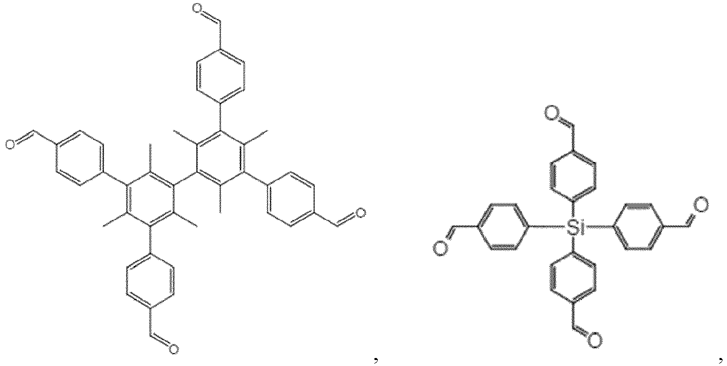

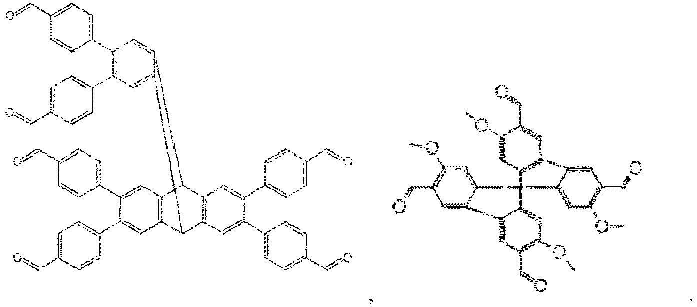

In some embodiments, the compound is selected from any of the following structures.

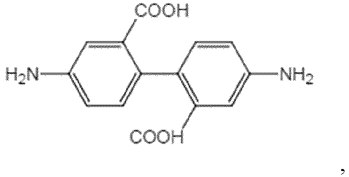

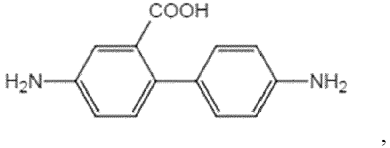

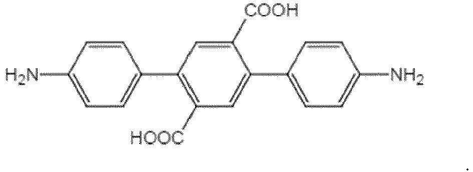

An embodiment of the present application provides a method for preparing the above-described three-dimensional carboxylic acid covalent organic framework, including following steps:
mixing the monomer, the compound, a first organic solvent, and a catalyst together to form a mixture;
removing oxygen from the mixture; and
conducting a reaction in a sealed and heated state to form the three-dimensional carboxylic acid covalent organic framework.

In an embodiment, the method for removing oxygen involves a freeze-thaw process. This process includes freezing the mixture placed in a sealed container using liquid nitrogen, vacuuming the container after complete freezing, and allowing the container to return to room temperature. The freeze-thaw cycle can be repeated to thoroughly eliminate oxygen from the mixture.

The reaction is conducted at a temperature ranging from 80°C to 150°C for a period of time ranging from 3 days to 7 days. In an embodiment, the reaction is conducted at 120°C for 5 days.

In some embodiments, before mixing the monomer and the compound with the organic solvent and the catalyst, the monomer can be previously mixed with the compound, followed by removing oxygen from the mixture of the monomer and the compound. In an embodiment, the method to eliminate oxygen involves displacing the gas in the container holding the mixed monomer and compound with a non-oxygen gas, enabling gas displacement. The number of displacements is not limited, as long as it effectively removes oxygen from the reactants. In some embodiments, the non-oxygen gas can be nitrogen, helium, or both.

In some embodiments, the first organic solvent can be selected from alcohols, ethers, aromatic hydrocarbons, amides, sulfoxides, amides, and derivatives thereof. In some embodiments, the first organic solvent is selected from but not limited to the group consisting of 1,2-dichlorobenzene, 1,4-dioxane, n-butanol, ethanol, dichloromethane, N,N-dimethylformamide, chloroform, acetone, acetonitrile, tetrahydrofuran, and combinations thereof.

In some embodiments, the catalyst is a known catalyst commonly employed in the preparation of covalent organic framework materials. The catalyst can be selected from carboxylic acids and sulfonic acids, including but not limited to acetic acid, formic acid, benzenesulfonic acid, methyl benzenesulfonic acid, and combinations thereof. A molar ratio of the catalyst to the first organic solvent ranges from 1:5 to 1:30. In an embodiment, the molar ratio of the catalyst to the first organic solvent is 1:10.

In some embodiments, the preparation method further includes steps of washing, purifying, and drying the reaction product.

The washing process of the reaction product specifically involves immersing the obtained product in a second organic solvent. The second organic solvent can be selected from one or more of tetrahydrofuran, ethanol, or acetone.

In some embodiments, the washing process includes immersing the obtained product in the second organic solvent for 24 hours, and refreshing the second organic solvent every 8 hours.

In some embodiments, both the first and second organic solvents are ultra-dry solvents to ensure high purity and low water content in the solvents.

In an embodiment, the purification process of the reaction product involves Soxhlet extraction, wherein an extraction solvent can be acetone or tetrahydrofuran and an extraction time ranges from 20 to 30 hours. In an embodiment, the extraction solvent is acetone, and the extraction time is 24 hours.

The drying process of the reaction product is conducted under vacuum at a temperature between 25°C and 140°C. In an embodiment, the drying temperature is 80°C.

An embodiment of the present application provides an application of the above-described three-dimensional carboxylic acid covalent organic framework as a gas adsorbent.

The three-dimensional carboxylic acid covalent organic framework, as an adsorbent, can be used for adsorbing fuel gases, such as hydrogen, methane, ammonia, and pollutant gases, such as carbon dioxide and sulfur dioxide.

The present application synthesizes a three-dimensional carboxylic acid covalent organic framework with carboxyl groups through a pre-modification method from a monomer represented by structural formula I, II, or III, and a compound represented by structural formula IV or V This material possesses abundant active sites, capable of forming uniformly distributed pores on its surface, and exhibits a high specific surface area. Moreover, this material demonstrates excellent adsorption and catalytic functions, suitable for being used in gas adsorption as well as extraction or enrichment of metal ions.

The three-dimensional carboxylic acid covalent organic framework, the preparation method thereof, and the application thereof will be further described in detail below in combination with specific examples and comparative examples.

Unless specified otherwise, the reagents and materials utilized in the following examples of the present application can be commercially acquired.

### Example 1

### 1. Preparation of Three-dimensional Carboxylic Acid Covalent Organic Framework

22.5 mg of 2,2',7,7'-tetramethoxy-3,3',6,6'-tetraformyl-9,9'-spirobifluorene as the monomer and 27.2 mg of 4,4'-diamino-[1,1'-biphenyl]-2,2'-dicarboxylic acid were introduced into a high-borosilicate pressure-resistant glass tube (length × diameter = 15 × 8 mm²). The glass tube was sealed with a rubber stopper. Subsequently, the glass tube was evacuated and filled with nitrogen gas to remove oxygen from the reactants. Then, 1 mL of ultra-dry 1,2-dichlorobenzene as the solvent and 100 µL of glacial acetic acid were sequentially added. The mixture was allowed to stand at room temperature for 30 minutes. Next, the reaction system at the lower part of the glass tube was completely immersed in liquid nitrogen at 77 Kelvin (K) to thoroughly freeze the liquid. Then the glass tube was vacuum-thawed to room temperature. This freeze-thaw process was repeated three times. The solvent at the lower part of the glass tube was frozen again with liquid nitrogen and evacuated, and finally the mouth of the glass tube was sealed using a handheld blowtorch. Once the solvent was completely thawed and returned to room temperature, the glass tube was placed in a convection oven at 120°C for a 120-hour reaction. After completion of the reaction, the glass tube was removed from the oven and allowed to return to room temperature. The reaction product was then transferred to a 20 mL sample bottle and immersed in ultra-dry tetrahydrofuran, and the tetrahydrofuran was refreshed every 8 hours three times. The mixture was filtered and subjected to acetone Soxhlet extraction for 24 hours, and subsequently vacuum-dried at 80°C for 12 hours, thereby obtaining a yellow product.

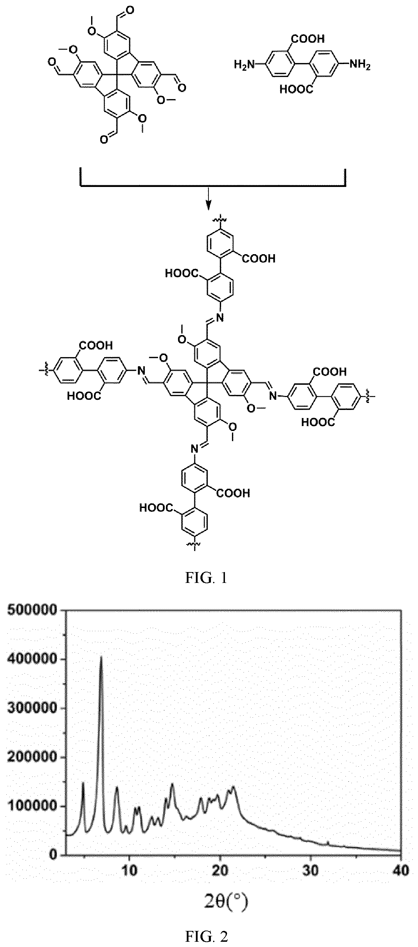

The synthetic process and structure of the yellow product are shown in FIG. 1.

### 2. Performance Tests

1) The obtained three-dimensional carboxylic acid covalent organic framework was subjected to PXRD analysis using a Bruker D8 Advance X-ray diffractometer. The test angle ranged from 2° to 40°, and the scanning speed was 0.02°/s.
2) The adsorption-desorption performance of the obtained three-dimensional carboxylic acid covalent organic framework for nitrogen gas was tested at liquid nitrogen temperature (77 K) using a BEL sorp-max II analyzer.
3) The adsorption-desorption performance of the obtained three-dimensional carboxylic acid covalent organic framework for carbon dioxide was tested using a BSD-PH Full-Auto High Pressure & Desorption analyzer, during which carbon dioxide had a temperature of 298 K and a pressure of 0 bars to 50 bars.

The PXRD pattern of the three-dimensional carboxylic acid covalent organic framework obtained in this example is shown in FIG. 2, exhibiting excellent crystallizability of the material.

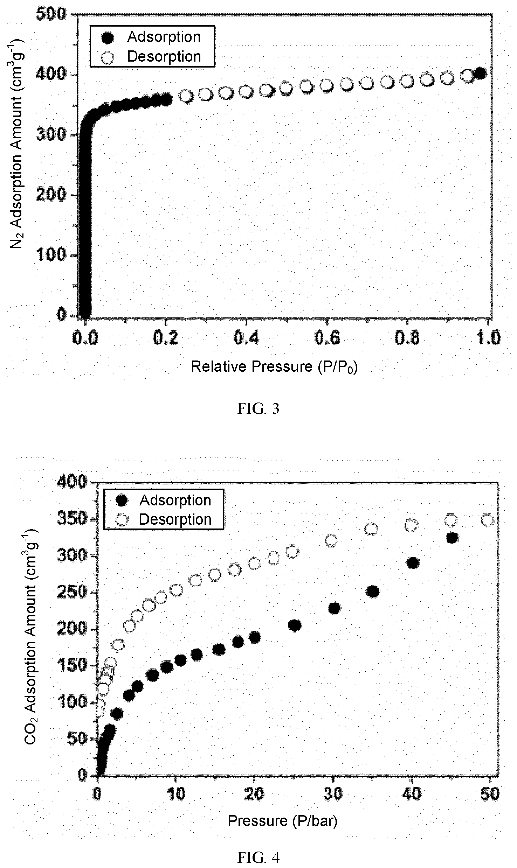

The adsorption/desorption isotherms of the three-dimensional carboxylic acid covalent organic framework obtained in this example for nitrogen gas are shown in FIG. 3, wherein P denotes partial pressure of nitrogen gas, and P₀ denotes the saturation pressure of nitrogen gas at liquid nitrogen temperature. It can be seen that at a lower pressure (<0.1 P/P₀), the nitrogen adsorption amount abruptly increases, revealing that the material has numerous micropores.

The adsorption/desorption isotherms of the three-dimensional carboxylic acid covalent organic framework obtained in this example for carbon dioxide gas at different pressures are shown in FIG. 4, wherein the horizontal axis represents the pressure of carbon dioxide gas.

Both FIG. 3 and FIG. 4 demonstrate strong adsorption capacity of this material, suggesting a substantial specific surface area and abundant active sites.

### Example 2

The preparation method in this example is substantially the same as that in Example 1, with differences in the adopted monomer, compound, catalyst, and reaction temperature. The specific preparation steps are as follows:

21.6 mg of tetrakis(4-formylphenyl)methane and 27.2 mg of 4,4'-diamino-[1,1'-biphenyl]-2,2'-dicarboxylic acid were introduced into a high-borosilicate pressure-resistant glass tube (length × diameter = 15 × 8 mm²). The glass tube was sealed with a rubber stopper. Subsequently, the glass tube was repeatedly filled with nitrogen gas to remove oxygen from the reactants. Then, 1 mL of ultra-dry 1,4-dioxane and 100 µL of a 6 M acetic acid aqueous solution were sequentially added. The mixture was allowed to stand at room temperature for 30 minutes. Next, the reaction system at the lower part of the glass tube was completely immersed in liquid nitrogen at 77 K to thoroughly freeze the liquid. Then the glass tube was vacuum-thawed to room temperature. This freeze-thaw process was repeated three times. The solvent at the lower part of the glass tube was frozen again with liquid nitrogen and evacuated, and finally the mouth of the glass tube was sealed using a handheld blowtorch. Once the solvent was completely thawed and returned to room temperature, the glass tube was placed in a convection oven at 90°C for a 120-hour reaction. After completion of the reaction, the glass tube was removed from the oven and allowed to return to room temperature. The reaction product was then transferred to a 20 mL sample bottle and immersed in ultra-dry tetrahydrofuran, and the tetrahydrofuran was refreshed every 8 hours three times. The mixture was filtered and subjected to acetone Soxhlet extraction for 24 hours, and subsequently vacuum-dried at 80°C for 12 hours, thereby obtaining a dark yellow product.

### Example 3

The preparation method in this example is substantially the same as that in Example 1, with differences in the adopted monomer, compound, catalyst, and reaction temperature. The specific preparation steps are as follows:

27.6 mg of 1,3,5,7-tetrakis(4-formylphenyl)adamantane and 27.2 mg of 4,4'-diamino-[1,1'-biphenyl]-2,2'-dicarboxylic acid were introduced into a high-borosilicate pressure-resistant glass tube (length × diameter = 15 × 8 mm²). The glass tube was sealed with a rubber stopper. Subsequently, the glass tube was repeatedly filled with nitrogen gas to remove oxygen from the reactants. Then, 1 mL of ultra-dry 1,4-dioxane and 100 µL of a 6 M acetic acid aqueous solution were sequentially added. The mixture was allowed to stand at room temperature for 30 minutes. Next, the reaction system at the lower part of the glass tube was completely immersed in liquid nitrogen at 77 Kelvin (K) to thoroughly freeze the liquid. Then the glass tube was vacuum-thawed to room temperature. This freeze-thaw process was repeated three times. The solvent at the lower part of the glass tube was frozen again with liquid nitrogen and evacuated, and finally the mouth of the glass tube was sealed using a handheld blowtorch. Once the solvent was completely thawed and returned to room temperature, the glass tube was placed in a convection oven at 90°C for a 120-hour reaction. After completion of the reaction, the glass tube was removed from the oven and allowed to return to room temperature. The reaction product was then transferred to a 20 mL sample bottle and immersed in ultra-dry tetrahydrofuran, and the tetrahydrofuran was refreshed every 8 hours three times. The mixture was filtered and subjected to acetone Soxhlet extraction for 24 hours, and subsequently vacuum-dried at 80°C for 12 hours, thereby obtaining a pale yellow product.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present disclosure.

The above-described embodiments are only several implementations of the present disclosure, and the descriptions are relatively specific and detailed, but they should not be construed as limiting the scope of the present disclosure. It should be understood by those of ordinary skill in the art that various modifications and improvements can be made without departing from the concept of the present disclosure, and all fall within the protection scope of the present disclosure. Therefore, the patent protection of the present disclosure shall be defined by the appended claims.

## Claims

1. A three-dimensional carboxylic acid covalent organic framework, formed by connecting a monomer to a compound via imine bonds formed by reacting formyl groups in the monomer with amino groups in the compound, wherein the monomer is represented by structural formula I, II, or III: 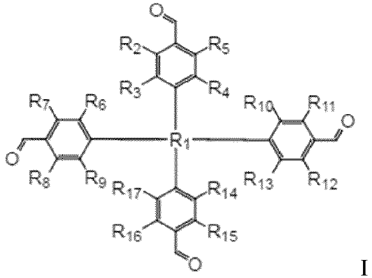 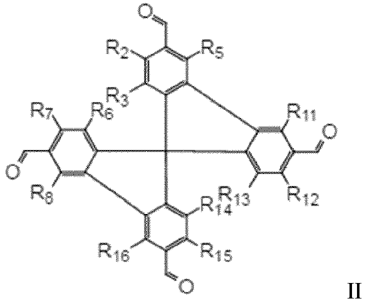 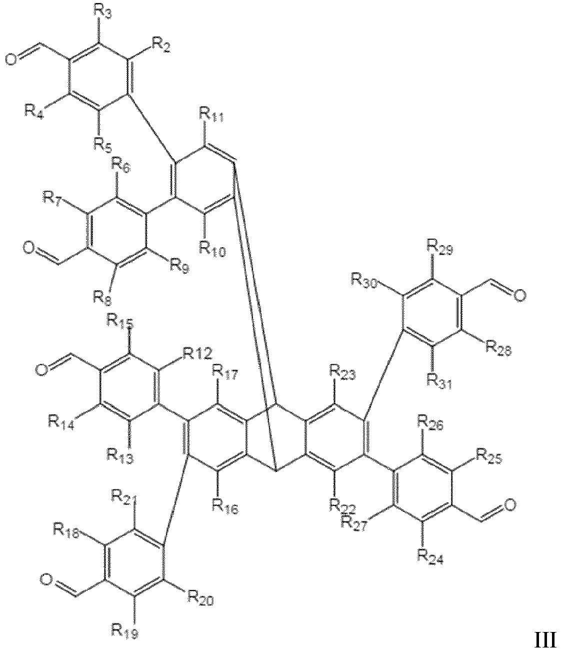
wherein R₁ is selected from the group consisting of C, Si, substituted or unsubstituted biphenyl, and 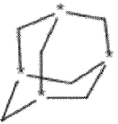 where * denotes a linking site;
R₂ to R₃₁ are independently selected from the group consisting of H, C₁-C₆ linear alkyl, C₁-C₆ branched alkyl, and C₁-C₆ alkoxyl;
the compound is represented by structural formula IV or V: 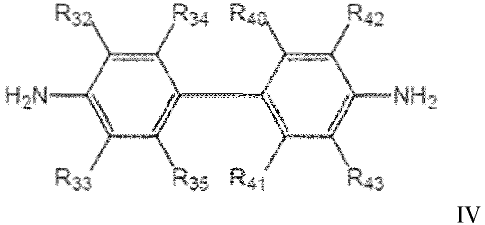 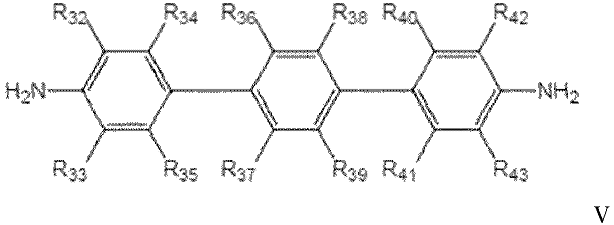
wherein R₃₂, R₃₃, R₄₂, R₄₃ are independently selected from the group consisting of H, Cl, Br, F, I, nitro, hydroxyl, C₁-C₆ linear alkyl, C₁-C₆ branched alkyl, and C₁-C₆ alkoxyl; R₃₄ to R₄₁ are independently selected from the group consisting of H, Cl, Br, F, I, carboxyl, nitro, hydroxyl, C₁-C₆ linear alkyl, C₁-C₆ branched alkyl, and C₁-C₆ alkoxyl; and at least one of R₃₄ to R₄₁ is carboxyl.

2. The three-dimensional carboxylic acid covalent organic framework according to claim 1, wherein the monomer is represented by formula VI, VII, or VIII:

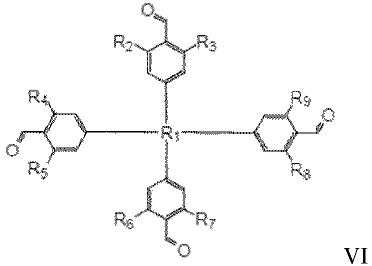

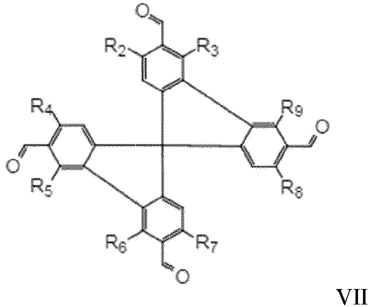

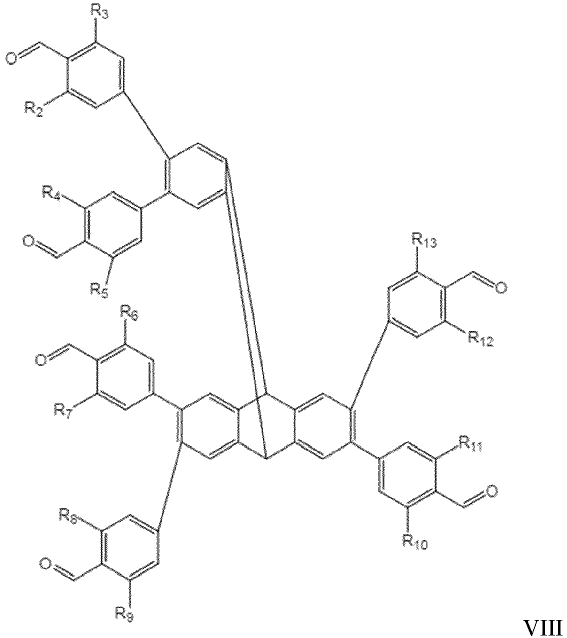

3. The three-dimensional carboxylic acid covalent organic framework according to claim 1 or 2, wherein the monomer is represented by formula VI or VII: 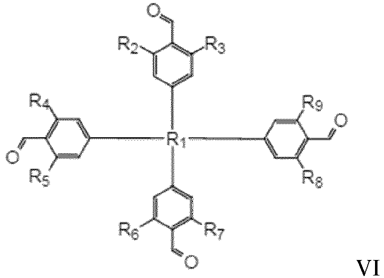 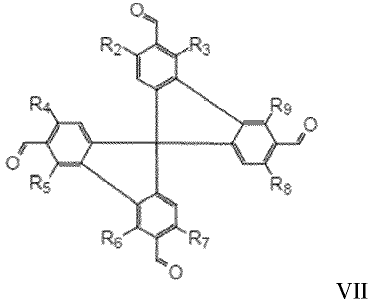 wherein R₂ to R₉ are independently selected from H or C₁-C₆ alkoxyl, and the two groups of R₂ to R₉ connected to a phenyl group and adjacent to a formyl group are different from each other.

4. The three-dimensional carboxylic acid covalent organic framework according to any one of claims 1 to 3, wherein the compound is represented by structural formula IV or V: 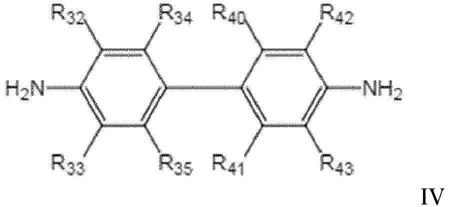 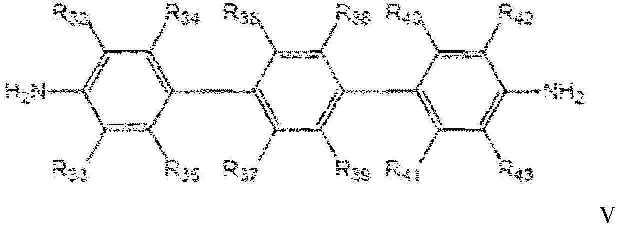 wherein at least two of R₃₄ to R₄₁ are carboxyl.

5. The three-dimensional carboxylic acid covalent organic framework according to any one of claims 1 to 4, wherein the compound is represented by structural formula IX or X: 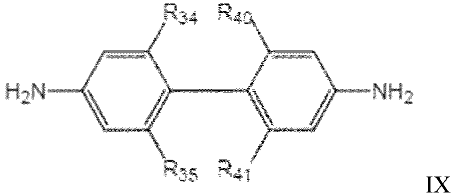 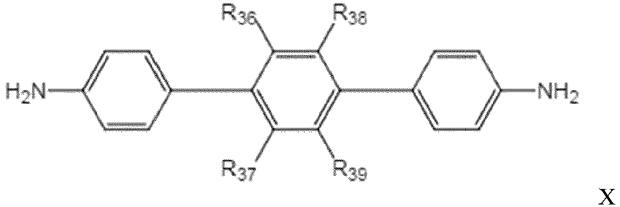 wherein R₃₄ to R₄₁ are independently selected from H or carboxyl, and at least one of R₃₄ to R₄₁ is carboxyl.

6. The three-dimensional carboxylic acid covalent organic framework according to any one of claims 1 to 5, wherein the monomer is selected from the group consisting of following structures:

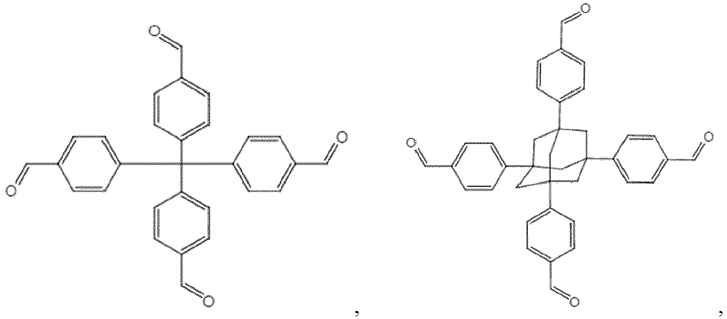

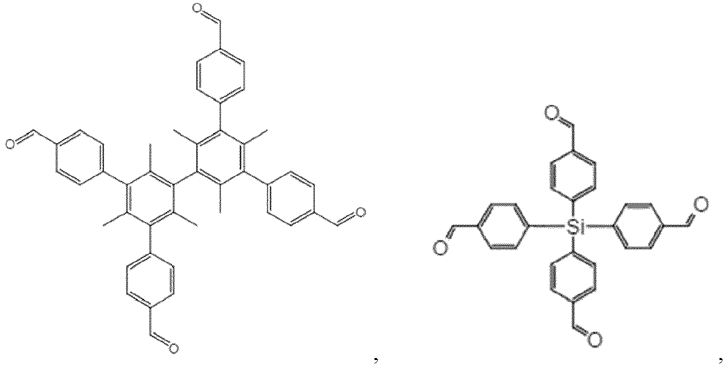

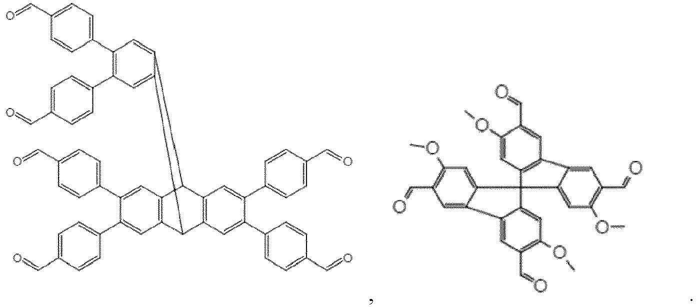

7. The three-dimensional carboxylic acid covalent organic framework according to any one of claims 1 to 6, wherein the compound is selected from the group consisting of following structures:

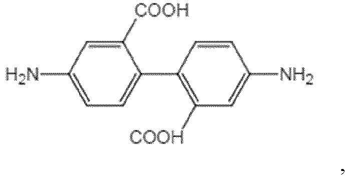

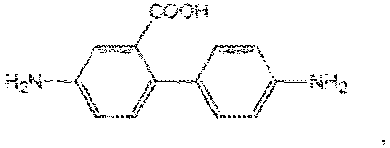

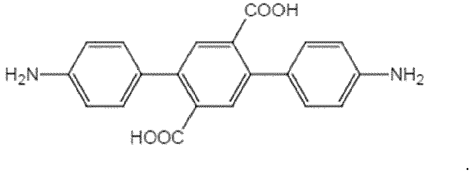

8. The three-dimensional carboxylic acid covalent organic framework according to any one of claims 1 to 7, wherein a same monomer molecule is connected with a plurality of compound molecules via imine bonds formed by reacting formyl groups with amino groups, and a same compound molecule is connected with a plurality of monomer molecules via imine bonds formed by reacting formyl groups with amino groups.

9. A method for preparing a three-dimensional carboxylic acid covalent organic framework according to any one of claims 1 to 7, the method comprising:
mixing the monomer, the compound, a first organic solvent, and a catalyst together, removing oxygen from the mixture, and then conducting a reaction in a sealed and heated state to form the three-dimensional carboxylic acid covalent organic framework.

10. The method according to claim 9, wherein the organic solvent is selected from the group consisting of 1,2-dichlorobenzene, 1,4-dioxane, n-butanol, ethanol, dichloromethane, N,N-dimethylformamide, chloroform, acetone, acetonitrile, tetrahydrofuran, and combinations thereof.

11. The method according to claim 9 or 10, wherein the catalyst is selected from the group consisting of acetic acid, formic acid, benzenesulfonic acid, methyl benzenesulfonic acid, and combinations thereof.

12. The method according to any one of claims 9 to 11, wherein the reaction is conducted at a temperature ranging from 80°C to 150°C for a period of time ranging from 3 days to 7 days.

13. The method according to any one of claims 9 to 12, further comprising steps of washing, purifying, and drying the reaction product.

14. An application of the three-dimensional carboxylic acid covalent organic framework according to any one of claims 1 to 8 as a gas adsorbent.

15. A gas adsorbent comprising the three-dimensional carboxylic acid covalent organic framework according to any one of claims 1 to 5.
